Europäisches Patentamt

European Patent Office

Office européen des brevets

(11) Numéro de publication: **0 303 534 B1**

(12) **FASCICULE DE BREVET EUROPEEN**

(45) Date de publication de fascicule du brevet: **06.10.93**  (51) Int. Cl.⁵: **D03D 15/00**, D03D 13/00

(21) Numéro de dépôt: **88402062.9**

(22) Date de dépôt: **08.08.88**

(54) Structure textile pour la réalisation de stratifiés à hautes propriétés mécaniques.

(30) Priorité: **11.08.87 FR 8711429**

(43) Date de publication de la demande:
**15.02.89 Bulletin 89/07**

(45) Mention de la délivrance du brevet:
**06.10.93 Bulletin 93/40**

(84) Etats contractants désignés:
**BE CH DE ES GB GR IT LI NL SE**

(56) Documents cités:
**FR-A- 1 394 271**
**FR-A- 2 220 610**
**FR-A- 2 568 275**
**GB-A- 2 093 768**
**US-A- 4 320 160**

(73) Titulaire: **BROCHIER S.A.**
**33 Avenue Franklin Roosevelt**
**B.P. 272**
**F-69150 Décines(FR)**

(72) Inventeur: **Bompard, Bruno**
**23, rue Montbrillant**
**F-69003 Lyon(FR)**
Inventeur: **Aucagne, Jean**
**Pierre Blanche**
**Rochetoirin**
**F-38110 La Tour du Pin(FR)**

(74) Mandataire: **Phélip, Bruno et al**
**c/o Cabinet Harlé & Phélip**
**21, rue de La Rochefoucauld**
**F-75009 Paris (FR)**

Rank Xerox (UK) Business Services
(3.10/3.6/3.3.1)

**Description**

L'invention appartient au domaine des structures textiles plus particulièrement destinées à la réalisation d'articles stratifiés du genre utilisé dans les matériaux composites. L'invention a pour objet une nouvelle structure de ce type ainsi que les stratifiés l'incorporant.

Il est connu de mettre en oeuvre des structures textiles comprenant des fils ou fibres de matière thermoplastique, afin de réaliser des stratifiés en empilant de telles structures individuelles puis en soumettant l'ensemble, dans un moule, à des conditions de chaleur et de pression permettant d'aboutir à un matériau composite dans lequel la résine thermoplastique est armée par la structure textile. A titre de référence bibliographique dans ce domaine technique, on peut citer le brevet UK-A-2 093 768.

On peut également citer le document US-4,320,160 qui décrit une structure textile de renforcement comprenant au moins deux couches de fils, les fils étant parallèles entre eux à l'intérieur de chaque couche et non entrecroisés avec les fils de l'autre couche, et les fils d'une couche étant perpendiculaires à ceux de l'autre couche Les deux couches sont maintenues ensemble par un filament de liage en verre qui est entrecroisé avec les fils de chacune des deux couches.

Ce mode de liage permet de supprimer la courbure des fils due à leur entrecroisement pour éviter que ne s'y concentrent des contraintes et ainsi améliorer la résistance à la flexion dans le matériau composite obtenu.

Les fils utilisés sont des fils de renforcement classiques. Ainsi, le matériau de renforcement décrit dans ce document doit être imprégné de résine avant d'être soumis à une pression et une température déterminées, de façon à obtenir un matériau composite à partir de la combinaison du matériau de renforcement et de la résine d'imprégnation.

Récemment, il a été proposé des fils textiles constitués d'une âme ou renfort pouvant avoir d'excellentes propriétés physiques et mécaniques, et d'un revêtement thermoplastique d'imprégnation ou d'enrobage. De tels fils, qui sont par exemple connus dans la technique sous la dénomination FIT, sont très intéressants pour réaliser des structures textiles convenant à la fabrication de stratifiés. Grâce à leur constitution, de tels fils apportent la quantité voulue de résine thermoplastique, permettant ainsi d'aboutir à un matériau plus homogène.

Toutefois, par nature, de tels fils ont un diamètre relativement important, en raison de la présence de la résine d'imprégnation et/ou d'enrobage combinée à l'âme du fil. L'homme du métier sait que des structures tissées à partir des fils du genre FIT, ne peuvent pas avoir une structure plane : de tels tissus ont au contraire une allure ondulée, ce qui conduit en définitive à des défauts, lors de la fabrication des stratifiés, sous l'action de la chaleur et de la pression. En effet, lors de la fusion de la résine thermoplastique, les âmes des fils (ou fibres de renfort) sont entraînées par la matrice et se déplacent lorsque la pression est appliquée pour réaliser le stratifié. Ainsi, avec les tissus à base de fils du genre FIT et fabriqués suivant les armures classiques, telles que taffetas, serge, satin et autres, on obtient des stratifiés ayant des propriétés mécaniques moyennes.

L'invention a pour but de fournir une nouvelle structure textile à base de fils imprégnés et/ou enrobés de matière thermoplastique, permettant de réaliser des stratifiés à propriétés mécaniques améliorées.

L'invention a pour objet une structure textile comprenant au moins deux couches superposées de fils, dans laquelle les fils s'étendent, dans chaque couche, parallèlement les uns aux autres et ne sont pas entrecroisés avec les fils de chaque autre couche, les fils de chacune de ces couches s'étendant dans une direction perpendiculaire à celle dans laquelle s'étendent les fils d'une autre de ces couches, et dans laquelle une armure de liage lie ces couches de fils ensemble, cette armure consistant en une chaîne et une trame maintenant les fils en position les uns par rapport aux autres caractérisée en ce que lesdits fils sont constitués par une âme ou un renfort imprégnés ou enrobés d'un matériau thermoplastique.

Dans la structure textile selon l'invention, on peut faire appel à n'importe quel fil ou fibre de renfort habituellement utilisé dans les structures techniques de ce genre. Il s'agit donc de fibres de carbone, de verre, d'aramide, de carbure de silicium, de céramique et autres fibres connues pour présenter de bonnes propriétés physiques et/ou mécaniques.

Ainsi qu'on l'a mentionné précédemment, l'invention met en oeuvre les fils ou fibres ci-dessus, qui sont imprégnés et/ou enrobés d'un revêtement ou gaine de matière thermoplastique. Celle-ci peut être choisie parmi n'importe laquelle résine thermoplastique utilisable dans ce genre d'application, telle que par exemple les polyoléfines, les polyamides les polyesters, les polyphényle-sulfones (PPS), les polyéther-sulfones (PES), les polyétherimides (PEI), les polyéther-éther-cétones (PEEK) et autres matières analogues ayant des propriétés thermoplastiques et capables d'imprégner ou d'enrober les fils ou fibres précités. On a obtenu par exemple de bons résultats en utilisant des fils de carbone ou d'aramide, revêtus de polyamide.

Les fils de ce genre sont notamment connus de l'homme du métier sous le nom de fils FIT, et peuvent être pratiquement obtenus par des moyens également connus, par exemple par enrobage de l'âme avec un gainage thermoplastique.

Selon l'invention, la structure textile comprend au moins deux couches de tels fils, lesdites couches étant disposées sous forme de deux nappes unidirectionnelles orientées perpendiculairement l'une à l'autre, les fils d'une couche n'étant pas entrecroisés avec les fils de l'autre.

Lesdites couches sont maintenues par une armure de liage constituée d'une chaîne et d'une trame, dont la fonction essentielle est celle de liage. On peut donc utiliser une large variété de fils, fibres ou filaments pour ces chaîne et trame de liage, qui peuvent par exemple être en verre, en polyester, ou, le plus avantageusement, en mono ou multi-filaments de la même nature chimique que celle de la gaine ou de l'âme des fils composant les couches précitées. Dans la pratique, les meilleurs résultats ont été obtenus avec une armure de liage constituée de fils silionne.

Le fait d'utiliser un fil de liage complémentaire pour rendre solidaires deux nappes était déjà connu, par exemple pour lier des fils de verre haut module, mais, à la connaissance du demandeur, on n'a jamais appliqué une armure de liage dans une structure textile comprenant des couches non entrecroisées de fils imprégnés et/ou enrobés de matière thermoplastique, du genre des fils FIT. Dans cette application, l'invention permet de maintenir les fibres de renfort pendant le moulage sous pression lors de la réalisation de stratifiés et de matériaux composites les comprenant. Dans de tels stratifiés, on met en oeuvre un certain nombre de structures textiles unitaires, telles que définies ci-dessus, sous forme de "plis" superposés selon des directions qui peuvent varier entre les plis. Dans une telle application, c'est-à-dire la fabrication de stratifiés, pour laquelle la présente invention est spécialement conçue, on a constaté que la mise en oeuvre de la structure textile précitée procurait un certain nombre d'améliorations par rapport à un simple tissu unidirectionnel réalisé de manière classique à partir de fils du type FIT :

- les propriétés mécaniques (contrainte en cisaillement, contrainte en flexion, module en flexion), sont toutes supérieures;
- on obtient des caractéristiques supérieures en utilisant des stratifiés comportant un nombre de plis inférieur à celui qui est nécessaire avec un tissu unidirectionnel.
- lors de la fabrication du stratifié, on peut utiliser des pressions plus faibles pour obtenir la même épaisseur de matériau.
- le taux volumique de fibres (tvf), qui est un paramètre usuel pour la caractérisation des matériaux composites stratifiés, est plus élevé avec les structures textiles selon l'invention, ou est obtenu plus rapidement avec une même pression de moulage.
- corrélativement au taux volumique de fibres, la porosité du matériau composite obtenu selon l'invention est très faible : elle ne dépasse pas 2 % et est en général quasiment nulle.

On voit ainsi que les structures textiles de l'invention procurent de nombreux avantages pour la réalisation de matériaux composites stratifiés.

On a indiqué précédemment que l'une des caractéristiques essentielles de la nouvelle structure textile était de comprendre une armure de liage. Ladite armure peut être en place d'une manière quelconque, en vue de maintenir en position les fils imprégnés et/ou enrobés de matière thermoplastique. Ainsi le montage de l'armure peut être à chaîne et trame traditionnelles, la trame étant constituée de fils parallèles et la chaîne d'une série de fils parallèles entre eux, orientés perpendiculairement aux fils de trame et passant alternativement sur chacun d'entre eux en enfermant les fils de renfort. Des variantes d'armure de liage peuvent aussi être utilisées. Par exemple, on peut conférer à la structure textile des degrés variables de souplesse, tout en maintenant convenablement les fils de renfort, en utilisant des fils de chaîne qui, après avoir enfermé un fil de renfort, ne passent pas sur le fil de trame et le fil de renfort immédiatement adjacents mais après avoir sauté ces derniers, ou un ensemble de ces derniers, passent sur un fil de trame et un fil de renfort consécutifs. Des exemples de tels modes de tissage, qui sont en eux-mêmes connus de l'homme du métier, seront donnés ci-après.

L'invention sera encore illustrée, sans être aucunement limitée, par la description qui suit, faite en référence aux dessins annexés, sur lesquels :

Figure 1 représente en perspective une structure textile selon l'invention.

Figure 2 est une coupe dans la structure de la Figure 1, faite dans le sens chaîne de celle-ci (flèche F de Figure 1).

Figure 3 est une coupe analogue à la Figure 2, montrant une variante de réalisation de la structure textile.

Figure 4 est une coupe analogue aux Figures 2 et 3, et illustrant une autre variante.

Figure 5 montre d'une manière schématique et à l'échelle grossie un fil de renfort utilisé dans la structure textile selon l'invention.

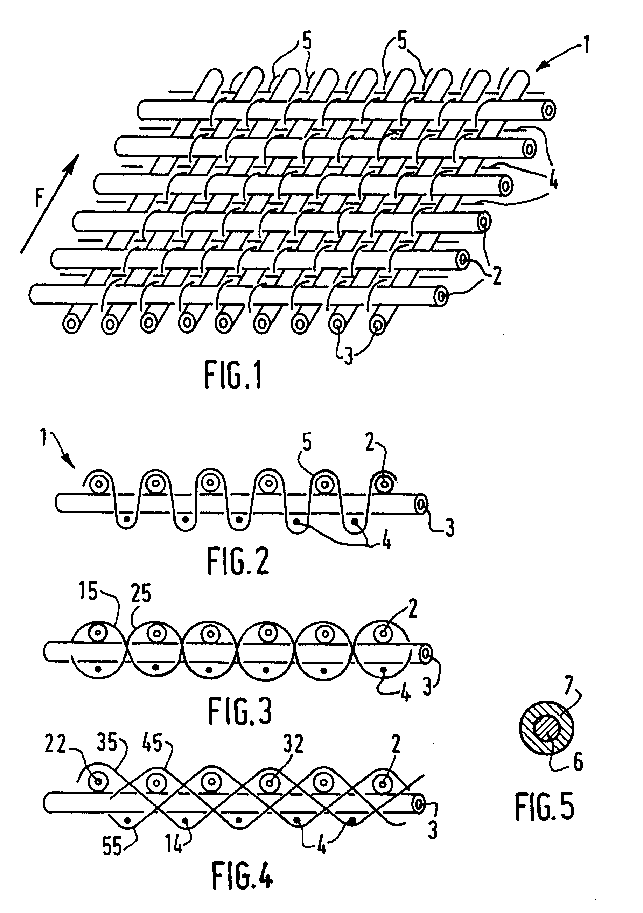

La Figure 1 montre schématiquement en perspective une structure textile selon l'invention. Dans l'exemple choisi, la structure comporte deux couches respectivement composées de fils de renfort (2, 3) parallèles entre eux dans chacune des couches et disposés perpendiculairement les uns par rapport aux autres. Ces fils de renfort sont d'une structure telle qu'illustrée à la Figure 5, c'est-à-dire qu'ils se composent d'une âme (6) imprégnée et/ou enrobée d'un revêtement ou gainage (7) en matière thermoplastique. On notera que, selon la caractéristique de la structure selon l'invention, les fils (2) ne sont pas entrecroisés avec les fils (3), la disposition étant réalisée sans embuvage. Des exemples de fils (2, 3), de leurs âmes et de la matière thermoplastique qui les entoure ont déjà été indiqué précédemment. Par commodité on parlera maintenant de fils type FIT.

Selon la caractéristique essentielle de l'invention, les deux nappes unidirectionnelles (2,3) de fils type FIT, sont liées par une armature de liage comprenant une trame (4) constituée de fils parallèles, et une chaîne (5) constituée de fils parallèles entre eux, qui passent, comme l'illustre la Figure 2, respectivement autour d'un fil de liage (4) et d'un fil (2), la disposition générale étant celle illustrée à la Figure 1. On a déjà donné précédemment toutes indications sur la nature des fils constituant l'armature de liage.

On obtient ainsi une structure textile désignée par la référence générale (1), comme illustré aux Figures 1 et 2.

Les Figures 3 et 4 illustrent des variantes de réalisation. A la Figure 3, l'armure de liage comprend encore des fils de trame (4) mais elle présente des fils de chaîne (15, 25), disposés comme illustré au dessin, en enfermant respectivement un fil (2) et un fil de liage (4).

La Figure 4 montre une autre variante d'armure de liage avec fils de trame (4) et des fils de chaîne (35, 45, 55). Un fil de chaîne, tel que (35) passe sur un premier fil (22) de renfort, puis sur un fil de trame (14) pour passer ensuite sur un fil (32) de renfort décalé de trois fils dans la nappe de fils (2). Il en est de même respectivement pour les fils (45 et 55) de chaîne de l'armure de liage.

Les structures représentées aux Figures 3 et 4 illustrent à titre de simple exemple, des possibilités de tissage qui peuvent conférer à la structure textile davantage de souplesse, tout en maintenant les fils de renfort (2, 3) à leurs places respectives, tout comme la structure illustrée aux Figures 1 et 2.

Il va sans dire que d'autres variantes de tissage sur l'armure de liage peuvent être appliquées, sans sortir pour autant du cadre de l'invention.

On a tissé conformément aux dessins des Figures 1 et 2, une structure textile selon l'invention, comprenant des fils de type FIT (2, 3) de carbone, revêtus de polyamide ("Nylon 12"). Les fils de carbone utilisés comme âme dans les fils type FIT, avaient les caractéristiques suivantes : dénomination commerciale FILKAR type T300/B/6K/40A.

L'armure de liage était composée de fils (4) de trame silionne 34 tex et de fils (5) de chaîne silionne 22 tex.

Il va sans dire qu'il s'agit d'un simple exemple, car on peut aussi appliquer l'invention à la réalisation de structures textiles dans lesquelles les couches de fils (2, 3) sont de natures différentes, par exemple verre-carbone, carbone-aramide, verre-aramide, carbone-carbure de silicium, aramide-carbure de silicium et autres combinaisons analogues. De même, l'armure de liage peut être composée de fils différents choisis parmi le verre aramide, carbone, carbure de silicium, céramique et des fibres thermoplastiques telles que polyamide, polyester, PES, PPS, PEI, PEEK ou autres.

A titre de comparaison, on a également fabriqué selon les techniques traditionnelles de tissage, un tissu unidirectionnel, en utilisant en chaîne les fils de type FIT ayant des caractéristiques identiques à celles de la structure selon l'invention, et en trame un fil silionne 34 tex.

On a mesuré et comparé les caractéristiques mécaniques du tissu selon l'invention et du tissu traditionnel en réalisant des éprouvettes, ainsi qu'il est usuel pour l'évaluation des tissus techniques destinés aux stratifiés, conformément aux normes publiées par la Société Aérospatiale IGC 04.26.235 pour le cisaillement et IGC 04.26.245 pour la flexion.

Les résultats de ces mesures sont rassemblés dans le Tableau I.

### TABLEAU I

| Caractéristiques mécaniques | Tissu selon * l'invention | Tissu ** traditionnel |
|---|---|---|
| contrainte en cisaillement (MPa) | 35-40 | 35 |
| contrainte en flexion (MPa) | 300-400 | 250-300 |
| module de flexion (MPa) | 20000-40000 | 15000-20000 |

\* tissu croisé 0°/90°, formé de fils type FIT âme fil de carbone (T300.6K) recouverte de polyamide ("Nylon 12") et armure de liage composée de fils de silionne 34 tex en trame et de fils de silionne 22 tex en chaîne

\*\*tissu unidirectionnel taffetas constitué de fils chaîne type FIT identiques aux fils précités et silionne 34 tex en trame.

On a également fait des comparaisons sur le taux volumique de fibres (tvf) pour des plaques ou stratifiés comportant un nombre identique de plis, chacun d'eux étant réalisé d'une part à partir du tissu selon l'invention et, d'autre part, avec le tissu traditionnel. Avec ce dernier, sous une pression de moulage de 7 bars, la valeur tvf est voisine de 42 %, ce qui n'est pas satisfaisant. On obtient des valeurs acceptables de tvf (supérieurs à 50 %), par exemple de 50 à 60 %, en faisant croître la pression jusqu'à 8-10 bars. Au contraire, pour une plaque identique avec le tissu selon l'invention, on obtient 45 % de tvf sous la pression de 7 bars et on atteint plus rapidement une valeur de 50 à 60% à une pression d'environ 8 bars. Ainsi, la durée de fabrication est réduite et la pression de moulage est moins élevée, ce qui est intéressant pour la production de stratifiés en grande série.

Corrélativement, on a comparé les valeurs de la porosité, qui ont une certaine relation avec le taux volumique de fibres. Dans les conditions précédentes, on obtient une porosité de 0 à 5 % avec le tissu traditionnel, et cette valeur atteint même 8 % pour un tvf = 60 %. En comparaison, les plaques obtenues à partir du tissu selon l'invention possèdent une porosité ne dépassant pas 1 à 2 % et, en général, pratiquement voisine de 0 %. On est ainsi assuré de disposer de matériaux composites stratifiés bien homogènes.

Enfin, on a effectué des mesures comparatives sur l'épaisseur des plaques.

On a ainsi réalisé une plaque à 11 plis simples (11 couches de fils UD) à base de tissu traditionnel, orientés respectivement selon les directions +45°, 0, -45°, 90°; +45°, 0, +45°, 90°, -45°, 0, +45°. La plaque obtenue avait une épaisseur trop importante, qui était de l'ordre de 3 mm. Pour réduire cette épaisseur, une pression de moulage d'au moins 8 à 10 bars était nécessaire.

On a réalisé comparativement une plaque à 7 plis doublés (14 couches de fils UD) à partir du tissu selon l'invention, respectivement orientés selon les directions (+45°, -45°), (90°, 0°), (-45°, +45°), (0°, 90°), (+45°, -45°), (0°, 90°), (-45°, +45°). L'épaisseur obtenue n'était que de 2,5mm pour une pression de l'ordre de 8 bars. On voit donc qu'à qualités mécaniques égales, il est possible de conférer au matériau stratifié selon l'invention une épaisseur plus faible que celle des matériaux obtenus avec un tissu traditionnel à base de fils type FIT.

Sans que cette explication puisse être considérée comme limitative, on pense que les propriétés supérieures obtenues par l'invention sont dues à ce que les fibres de renfort sont parfaitement maintenues en position par l'armure de liage, et ne se déplacent pas à l'intérieur de l'article stratifié lorsqu'on applique la pression et la température de moulage.

**Revendications**

**1.** Structure textile comprenant au moins deux couches (2,3) superposées de fils, dans laquelle les fils s'étendent, dans chaque couche, parallèlement les uns aux autres et ne sont pas entrecroisés avec les fils de chaque autre couche, les fils de chacune de ces couches s'étendant dans une direction perpendiculaire à celle dans laquelle s'étendent les fils d'une autre de ces couches, et dans laquelle une armure de liage (4,5) lie ces couches de fils ensemble, cette armure consistant en une chaîne (5) et une trame (4) maintenant les fils en position les uns par rapport aux autres caractérisée en ce que lesdits fils sont constitués par une âme (6) ou un renfort imprégnés ou enrobés d'un matériau thermoplastique (7).

**2.** Structure textile selon la revendication 1, caractérisée en ce qu'elle comporte des fils ou fibres (6) de renfort du genre utilisé dans la production de stratifiés pour matériaux composites, notamment de fils ou fibres de carbone, de verre, d'aramide, de carbure de silicium, de céramique et autres fibres connues pour leurs bonnes propriétés physiques et/ou mécaniques.

**3.** Structure textile selon l'une des revendications 1 ou 2, caractérisée en ce que la matière thermoplastique (7) est d'un type quelconque utilisé pour la réalisation d'articles stratifiés pour matériaux composites, par exemple : les polyoléfines, les polyamides, les polyesters, les polyéther-sulfones, les polyphényl-sulfones, les polyétherimides, les polyéther-éther-cétones et autres matières analogues ayant des propriétés thermoplastiques et capables d'imprégner ou d'enrober les fils ou fibres précités.

**4.** Structure textile selon la revendication 3, caractérisée en ce qu'elle comprend des fils de carbone ou d'aramide revêtus de polyamide.

**5.** Structure textile selon l'une quelconque des revendications 1 à 4, caractérisée en ce que les couches de fils (2, 3) sont disposées sous forme de deux nappes unidirectionnelles orientées perpendiculairement l'une à l'autre, les fils d'une couche n'étant pas entrecroisés avec les fils de l'autre.

**6.** Structure textile selon l'une quelconque des revendications 1 à 5, caractérisée en ce que l'armure de liage (4,5) comprend des fils, fibres ou filaments qui assurent essentiellement une fonction de liage mécanique, et qui peuvent par exemple être en verre, en polyester, ou, le plus avantageusement, en mono ou multi-filaments de la même nature chimique que celle de l'âme ou de la gaine des fils composant les couches précitées.

**7.** Structure textile selon l'une quelconque des revendications 1 à 6 , caractérisée en ce que l'armure de liage est constituée de fils silionne.

**8.** Structure textile selon l'une quelconque des revendications 1 à 7, caractérisée en ce que l'armure de liage comprend une chaîne (5) et une trame (4) traditionnelles, la trame (4) étant constituée de fils parallèles et la chaîne (5) d'une série de fils parallèles entre eux, orientés perpendiculairement aux fils de trame (4) et passant alternativement sur chacun d'entre eux en enfermant les fils (2) de renfort.

**9.** Structure textile selon l'une quelconque des revendications 1 à 7, caractérisée en ce que l'armure de liage comprend des fils de chaîne (15, 25) ou (35, 45, 55) qui, après avoir enfermé un fil de renfort (2, 22), sautent les fils de trame et les fils de renfort immédiatement adjacents, et après avoir ainsi sauté ces derniers, ou un ensemble de ces derniers, passent sur un fil de trame (14) et un fil de renfort (32) consécutifs.

**10.** Utilisation d'une structure textile selon l'une des revendications 1 à 9 pour réaliser des stratifiés et des matériaux composites à partir desdits stratifiés, en soumettant ladite structure textile à un moulage à chaud et sous pression.

**11.** Utilisation d'au moins deux structures textiles selon l'une des revendications 1 à 9 pour réaliser des stratifiés et des matériaux composites à partir desdits stratifiés en empilant lesdites structures et en soumettant l'empilement obtenu à un moulage à chaud et sous pression.

# EP 0 303 534 B1

**Claims**

1. Textile structure comprising at least two stacked layers (2,3) of threads, in which said threads in each of said layers extend parallel to one another and are non-interlaced with the threads of each of the other layers, the threads of each of said layers extending in a section perpendicular to the direction in which the threads of another of said layers exend, and comprising a binding weave (4,5) for binding said layers together, said binding weave comprising a weft (4) and a warp (5) securing said threads in position relative to one another, characterized in that said threads consist of a core (6) or reinforcement impregnated or covered with thermoplastic material (7).

2. Textile structure according to claim 1, characterized in that it comprises reinforcing threads or fibres (6) of the type used in the production of laminates for composite materials, especially threads or fibres of carbon, glass, aramid, silicon carbide, ceramic and other fibres known for their good physical and/or mechanical properties.

3. Textile structure according to one of claims 1 or 2, characterized in that the thermoplastic (7) is of any type used for producing laminated articles for composite materials, for example, the polyolefins, polyamides, polyesters, polyethersulfones, polyphenylsulfones, polyetherimides (sic), polyether ether ketones and other similar materials having thermoplastic properties and capable of impregnating or coating the abovementioned threads or fibres.

4. Textile structure according to claim 3, characterized in that it comprises carbon or aramid threads covered with polyamide.

5. Textile structure according to any one of claims 1 to 4, characterized in that the layers of threads (2, 3) are arranged in the form of two unidirectional laps oriented perpendicularly to one another, the threads of one layer not being interlaced with the threads of the other.

6. Textile structure according to any one of claims 1 to 5, characterized in that the binding weave (4,5) comprises threads, fibres or filaments which essentially perform a mechanical binding function and which can, for example, be of glass, polyester or, most advantageously, mono-filaments or multi-filaments of the same chemical type as that of the core or sheath of the threads forming the abovementioned layers.

7. Textile structure according to any one of claims 1 to 6, characterized in that the binding weave consists of glass-fibre threads.

8. Textile structure according to any one of claims 1 to 7, characterized in that the binding weave comprises a conventional warp (5) and weft (4), the weft (4) consisting of parallel threads and the warp (5) consisting of a series of threads parallel to one another, oriented perpendicularly to the weft threads (4) and passing alternately over each of them, at the same time enclosing the reinforcing threads (2).

9. Textile structure according to any one of claims 1 to 7, characterized in that the binding weave comprises warp threads (15, 25) or (35, 45, 55) which, after enclosing a reinforcing thread (2, 22), jump over the immediately adjacent weft threads and reinforcing threads and, after so jumping over these or a set of these, pass over a consecutive weft thread (14) and reinforcing thread (32).

10. Use of a textile structure according to any one of claims 1 to 9 for fabricating laminates and composite materials from such laminates, by subjecting said textile structure to heat and pressure in a mold.

11. Use of at least two textile structures according to any one of claims 1 to 9 for fabricating laminates and composite materials from such laminates, by stacking said structures and subjecting them to heat and pressure in a mold.

**Patentansprüche**

1. Textilstruktur mit wenigstens zwei übereinanderliegenden Schichten (2, 3) von Fäden, die in jeder Schicht zueinander parallel liegen und nicht mit den Fäden einer anderen Schicht verflochten sind,

7

wobei sich die Fäden jeder dieser Schichten in einer Richtung senkrecht zur Richtung, in der sich die Fäden einer anderen Schicht erstrecken, erstrecken und wobei eine Bindung, die durch Kette (5) und Schuss (4) gebildet ist, diese Fäden zueinander in ihrer Stellung hält, dadurch gekennzeichnet, dass die Fäden aus einer mit einem thermoplastischen Material (7) imprägnierten oder umhüllten Seele (6) oder Verstärkung gebildet sind.

2. Textilstruktur nach Anspruch 1,
dadurch gekennzeichnet,
daß sie Verstärkungsfäden oder -fasern (6) aufweist, wie sie bei der Herstellung von Schichtstoffen für zusammengesetzte Materialien verwendet werden, insbesondere Kohlenstoff-, Glas-, Aramid-, Siliciumcarbid-, Keramik- und andere -fäden oder -fasern enthalten, die wegen ihrer guten physikalischen und/oder mechanischen Eigenschaften bekannt sind.

3. Textilstruktur nach Anspruch 1 oder 2,
dadurch gekennzeichnet,
daß das thermoplastische Material (7) von einem solchen Typ ist, wie es bei der Herstellung von Schichtstoffen für zusammengesetzte Materialien verwendet wird, z.B. Polyolefine, Polyamide, Polyester, Polyäther-Sulfone, Polyphenyl-Sulfone, Polyätherimide Polyäther-Åther-Ketone und entsprechende Materialien, die thermoplastische Eigenschaften haben und die die bereits genannten Fäden oder Fasern imprägnieren oder umhüllen können.

4. Textilstruktur nach Anspruch 3,
dadurch gekennzeichnet,
daß sie Kohlenstoff- oder Aramidfasern enthält, die mit Polyamid umkleidet sind.

5. Textilstruktur nach einem der Ansprüche 1 bis 4,
dadurch gekennzeichnet,
daß die Schichten der Fäden (2,3) in Form von zwei jeweils in einer Richtung ausgerichteten Faservliesen, die senkrecht zueinander liegen, angeordnet sind, wobei die Fäden der einen Schicht nicht mit den Fäden der anderen Schicht verflochten sind.

6. Textilstruktur nach einem der Ansprüche 1 bis 5,
dadurch gekennzeichnet,
daß die Bindung (4,5) Fäden, Fasern oder Filamente enthält, die im wesentlichen die Funktion des mechanischen Bindens sichern, und die z.B. aus Glas, Polyester oder am vorteilhaftesten aus Mono- oder Multifilamenten mit derselben chemischen Beschaffenheit wie die der Seele oder der Hülle der Fäden, aus denen die bereits erwähnten Schichten zusammengesetzt sind, bestehen.

7. Textilstruktur nach einem der Ansprüche 1 bis 6,
dadurch gekennzeichnet,
daß die Bindung aus Silikonfäden gebildet ist.

8. Textilstruktur nach einem der Ansprüche 1 bis 7,
dadurch gekennzeichnet,
daß die Bindung eine herkömmliche Kette (5) und einen herkömmlichen Schuß (4) aufweist, wobei der Schuß (4) aus parallelen Fäden zusammengesetzt ist und die Kette (5) aus einer Reihe von zueinander parallelen Fäden, die senkrecht zu den Schußfäden (4) liegen und abwechselnd über jeden von ihnen laufen, indem sie die Verstärkungsfäden (2) einschließen.

9. Textilstruktur nach einem der Ansprüche 1 bis 7,
dadurch gekennzeichnet,
daß die Bindung Kettfäden (15, 25 oder 35, 45, 55) umfaßt, die, nachdem sie einen Verstärkungsfaden (2, 22) eingeschlossen haben, die unmittelbar angrenzenden Schuß- und Verstärkungsfäden überspringen, und, nachdem sie auf diese Weise die letzteren oder eine Anordnung von diesen letzteren übersprungen haben, nacheinander über einen Schußfaden (14) und einen Verstärkungsfaden (32) laufen.

**10.** Verwendung einer Textilstruktur gemäss einem der Ansprüche 1 bis 9 zum Herstellen von Schichtstoffen und zusammengesetzten Materialien aus diesen Schichtstoffen, wobei die Textilstruktur einer Formung unter Wärme und Druck unterzogen wird.

**11.** Verwendung von wenigstens zwei Textilstrukturen gemäss einem der Ansprüche 1 bis 9 zum Herstellen von Schichtstoffen und zusammengesetzten Materialien aus diesen Schichtstoffen, wobei die Textilstrukturen aufeinandergelegt und einer Formung unter Wärme und Druck unterzogen werden.

FIG.1

FIG.2

FIG.3

FIG.4

FIG.5